(19) **Europäisches Patentamt**

**European Patent Office**

**Office européen des brevets**

(11) Publication number: **0 411 696 A2**

(12) **EUROPEAN PATENT APPLICATION**

(21) Application number: 90202035.3

(51) Int. Cl.⁵: **F16C 32/04**

(22) Date of filing: 25.07.90

(30) Priority: 04.08.89 GB 8917876

(43) Date of publication of application:
06.02.91 Bulletin 91/06

(84) Designated Contracting States:
CH DE FR IT LI SE

(71) Applicant: **THE GLACIER METAL COMPANY LIMITED**
**Argyle House Joel Street**
**Northwood Hills Middlesex HA6 1LN(GB)**

(72) Inventor: **New, Nigel Henry**
**540 Kenton Lane**
**Harrow, Middlesex HA3 7LJ(GB)**

(74) Representative: **Gibson, George Kevin et al**
**Bowdon House Ashburton Road West**
**Trafford Park Manchester M17 1RA(GB)**

(54) Magnetic thrust bearings.

(57) Axial magnetic bearings are described suitable for use where high loads and high rotational speeds are found together. In an axial magnetic bearing, for thrusts along the shaft in one direction, there are included, in relation to the shaft, a generally radially extending thrust accepting face; and an electromagnet, with a face of each pole thereof parallel to, but spaced from, an individually associated portion of the thrust face. The rotor disc is tapered in the radially outward direction, to reduce the mass of the disc. Thus, the two said portions of the thrust face are radially separated, and are separated from each other along the axis of the shaft. Possibly, the two said portions of the thrust face extend precisely radially, between the portions there being a part of the thrust face in the shape of a truncated cone.

FIG.2

# MAGNETIC THRUST BEARINGS

The present invention relates to magnetic bearings for accepting axial thrust loads.

In an axial magnetic bearing the configuration is generally such that a ferromagnetic disc, secured to a shaft, is used for the rotor of the bearing. Structures, each with one or more electromagnets, are sited on each side of, and adjacent to, the disc and, depending upon the thrust direction, the electromagnets of one or other of the structures balance out thrust forces along the shaft axis. This is achieved by a control system which varies the current to the electromagnets in order to maintain a substantially constant gap between the electromagnets and the opposing disc faces.

The diameter of the disc has generally been dictated by the magnitude of the axial load which it is necessary to counteract.

Where the anticipated rotational speed of the shaft and disc is very high, and is also allied with high thrust loads, the stresses generated in the rotating disc may exceed the mechanical strength of the ferromagnetic material from which it is made.

There is disclosed in UK patent application No 8813010.0 a construction of an axial magnetic bearing where, for thrusts along the shaft in one direction, there are provided, by at least one ferromagnetic rotor disc, two axially spaced, and radially extending, thrust accepting faces, each such thrust face being associated individually with one pole of an electromagnet. In particular, it is disclosed that the non-thrust-accepting face of a rotor disc, in such an arrangement for the magnetic bearing, has the shape of a truncated cone, the rotor disc being tapered in the radially outward direction, in order to reduce the mass of the disc. 1

It is an object of the present invention to provide an axial magnetic bearing in which, in operation, there are lower induced stresses within a provided thrust bearing member, than for at least some known axial magnetic bearing constructions capable of accepting the same anticipated maximum thrust.

According to the present invention an axial magnetic bearing has a shaft, and, secured to the shaft, a rotor disc of ferromagnetic material which provides, in relation to the shaft axis, at least one generally radially extending face to accept thrusts along the shaft in one direction, the rotor disc being tapered in the radially outward direction, by the, or each, thrust accepting face of the rotor disc having the shape, at least generally that, of a truncated cone, and the magnetic bearing has a structure including at least one electromagnet, the poles of the, or each, electromagnet each has a face opposite to, and spaced from, an associated portion of the thrust face, each such pole face having a shape complementary to that of the associated portion of the thrust face, the arrangement being such that there are two such portions of the thrust face, and one portion is radially outwardly of the other portion, each portion is associated individually with one of the two said pole faces of the, or each, electromagnet, and with the two portions separated from each other along the axis of the shaft.

Because the rotor disc providing said at least one thrust face is tapered in the radially outward direction, advantageously the rotor disc has reduced mass, and, consequently, has a reduced tendency to burst.

If the thrust face has precisely the shape of a truncated cone, when the, or each, electromagnet of the structure is energised there is provided a radial force, in addition to the required axial force. This radial force is without any significant effect if there is also provided radial bearings of high stiffness, capable of withstanding this parasitic force.

Alternatively, the two said portions of the thrust face extend precisely radially, and each is opposite to, and spaced from, an individually associated precisely radially extending pole face of the, or each, electromagnet of the structure, and between the two said portions, there is a part of the thrust face having the shape of a truncated cone. Thus, when the, or each, electromagnet of the structure is energised no radial force is provided.

In order that there is not a significant difference of flux density between the poles of the, or each, electromagnet, for the two parts of the rotor disc providing the associated two said portions of the thrust face, it is required that the mean axial width of each of the two such parts of the rotor disc is, at least substantially, equal to the radial width of the, or each, associated pole face.

Further, in order that there is not a significant difference of flux density between the two parts of the rotor disc providing the two said portions of the thrust face, it is required that the product of the mean axial width of either one of the two such parts of the rotor disc, and the mean radial spacing of said one part of the rotor disc from the axis of the shaft, is, at least substantially, the same as the corresponding product associated with the other such part of the rotor disc.

When the shaft is of ferromagnetic material, said at least one thrust face may be provided by a rotor disc machined from the shaft material. Alternatively, an initially separate rotor disc is secured to the shaft, which shaft may not be of ferromagnetic material.

Conveniently, there are two structures each having at least one electromagnet, and the tapered rotor disc has two generally radially extending faces, each such face to accept thrusts along the shaft in the opposite direction to that in relation to which the other face is to accept thrusts, and the structures are arranged to be able to provide axial forces in opposition to each other.

In order that the present invention may be more fully understood examples will now be described by way of illustration only with reference to the accompanying drawings, of which:

Figure 1 shows a schematic section through a prior art axial magnetic thrust bearing, capable of balancing thrust forces in both possible directions along the shaft axis;

Figure 2 shows a schematic section through the axial magnetic bearing of Figure 1 modified in accordance with the present invention; and

Figure 3 corresponds to Figure 2, but shows another embodiment of an axial magnetic bearing in accordance with the present invention.

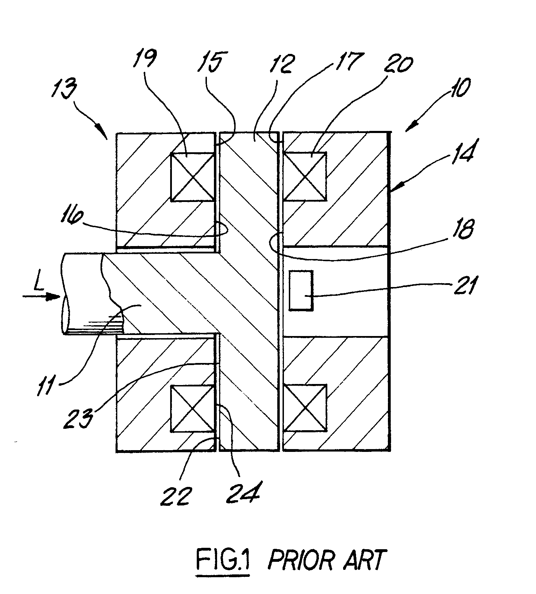

Referring to Figure 1, where a conventional axial magnetic thrust bearing is indicated generally at 10, the bearing assembly comprises a shaft 11 which is supported by either conventional mechanical journal bearings (not shown) or radial magnetic bearings (not shown). The shaft has a rotor disc 12 which is shown at the shaft end but may be intermediate the shaft. Two stationary annular electromagnets 13 and 14 are shown. The electromagnets 13 and 14 provide equal pole face areas, respectively, 15, 16 and 17,18; and have annular coils, respectively, 19 and 20. An external thrust load, "L",is applied to the shaft in the direction of the arrow. An axial position sensor 21 senses the axial position of the rotor disc 12 and via a known control system (not shown) the current to the coil 19 of the electromagnet 13 is varied to maintain the clearance 22 between the rotor face 23 and the face 24 of the electromagnet 13 substantially constant. The second electromagnet 14 only comes into operation if the direction of the applied thrust load is reversed for some reason.

The thrust capacity of the bearing is largely dictated by the face area of the electromagnets which in turn dictates the diameter of the rotor disc 12. Where both the axial thrust requirement and the rotational speeds are high the stresses generated at the disc periphery may exceed the strength of the disc material and cause it to burst.

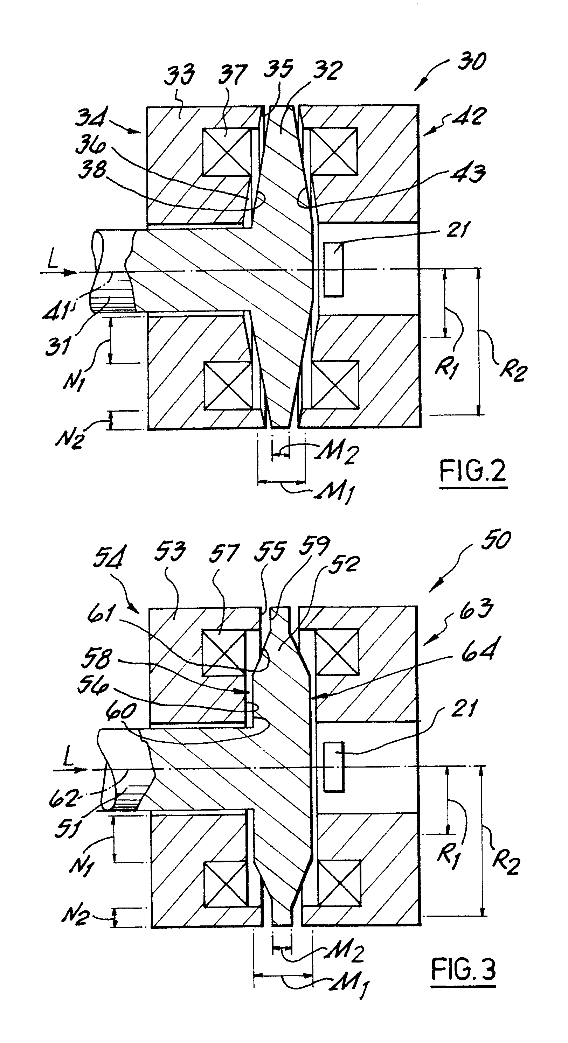

Figure 2 shows the magnetic thrust bearing of Figure 1 modified in accordance with the present invention. The bearing assembly shown generally at 30 comprises a shaft 31 having a rotor disc 32 either machined from the shaft material as shown in Figure 2, or attached thereto. The shaft is made from a ferromagnetic material such as ferritic stainless steel. An annular, generally channel-section core 33 of an electromagnet 34 surrounds the shaft 31, and has generally radially extending pole faces 35 and 36; and the electromagnet has an annular coil 37 in the channel section part of the core.

In order to reduce the mass of the rotor disc 32 the disc is tapered in the radially outward direction. A thrust face 38 provided by the tapered rotor disc 32 has the shape of a truncated cone. Parallel to, and spaced from, radially separated, thrust accepting portions 39 and 40 of the thrust face 38, are the pole faces 35 and 36, each pole face having the shape of a complementary truncated cone. Hence, the thrust accepting portions 39 and 40 of the thrust face 38 also are separated from each other along the axis of rotation of the shaft, the rotational axis being indicated by the dotted line 41. Further, the pole faces 35 and 36, correspondingly, are separated from each other along the axis 41 of the shaft 31.

With such an arrangement for an axial magnetic bearing, when the electromagnet 34 is energised there is provided a radial force, in addition to the required axial force.

This radial force is without any effect if there is associated with the magnetic thrust bearing a radial bearing of high stiffness, and of sufficent load capacity so as to be capable of carrying the extra imposed radial load.

As also is shown in Figure 2, but not essential, is a second electromagnet 42, corresponding to the electromagnet 14 of Figure 1. Again the second electromagnet 42 only comes into operation if the direction of the applied thrust "L" is reversed. The tapered rotor disc 32 has two generally radially extending faces, and the arrangement between the second thrust face 43, and its associated electromagnet 42, is the same as the arrangement between the thrust face 38, and its associated electromagnet 34, described above.

As for the known axial magnetic bearing assembly of Figure 1, the modification thereof in accordance with the present invention, and shown in Figure 2, has a known control system employing an axial position sensor 21, and closed loop feed back control circuitry to control the power applied to the electromagnets, in order to maintain substantially constant clearance between each electromagnet pole face and the associated rotor thrust face.

Another embodiment of an axial magnetic bearing in accordance with the present invention is shown at 50 in Figure 3. In this embodiment a shaft 51 has a rotor disc 52, and is surrounded by the core 53 of an electromagnet 54. The core 53, however, has precisely radially extending pole faces 55 and 56. An annular coil 57 is in a channel section part of the core 53.

Again, in order to reduce the mass of the rotor disc 52, this disc is tapered in the radially outward direction. However, the thrust face 58 provided by the tapered rotor disc has opposite to the electromagnet 54 two radially separated, precisely radially extending portions 59 and 60. Between the thrust accepting portions 59 and 60 is a part 61 of the thrust face 58, which part is in the shape of a truncated cone. Thus, the precisely radially extending portions 59 and 60 of the thrust face 58 also are separated from each other along the axis of rotation of the shaft, the axis of rotation being indicated by the dotted line 62. Further, the pole faces 55 and 56, correspondingly, are separated from each other along the axis 62 of the shaft 51. Hence, the electromagnet 54 does not provide any radial forces, even though the rotor disc 52 is tapered in form.

As indicated in Figure 3, but not essential, a second electromagnet 63 is provided, to come into operation if the direction of the applied thrust "L" is reversed. The arrangement between the second thrust face 64 of the tapered rotor disc 52, and its associated electromagnet 63, is the same as the arrangement between the thrust face 58, and its associated electromagnet 54, described above.

In relation to both embodiments of axial magnetic bearings and 50, of Figures 2 and 3, it is desirable that there is not a significant difference in flux density between either of the poles of the electromagnet, and the part of the rotor disc providing the associated thrust accepting portion of the, or each, thrust face. Thus, it is required that the mean axial width $M_1$ or $M_2$ of each such part of the rotor disc is, at least substantially, equal to the radial width, respectively, $N_1$ or $N_2$, of the associated pole face.

Further, it is desirable that there is not a significant difference in flux density between the two parts of the rotor disc providing the two thrust accepting portions of the, or each, thrust face. Hence, it is required that the product of the mean axial width $M_1$ or $M_2$ of one such part of the rotor disc, and the mean radial spacing, respectively, $R_1$ or $R_2$, of said one part of the rotor disc from the axis of rotation of the shaft, is, at least substantially, the same as the corresponding product associated with the other such part of the rotor disc:

$$M_1.R_1 = M_2.R_2$$

There may be provided on each side of the rotor disc, instead of a single electromagnet, a structure having more than one electromagnet.

## Claims

1. An axial magnetic bearing has a shaft, and, secured to the shaft, a rotor disc of ferromagnetic material which provides, in relation to the shaft axis, at least one generally radially extending face to accept thrusts along the shaft in one direction, the rotor disc being tapered in the radially outward direction, characterised by, the, or each, thrust accepting face of the rotor disc having the shape, at least generally that, of a truncated cone, and the magnetic bearing has a structure including at least one electromagnet, the poles of the, or each, electromagnet each has a face opposite to, and spaced from, an associated portion of the thrust face, each such pole face having a shape complementary to that of the associated portion of the thrust face, the arrangement being such that there are two such portions of the thrust face, and one portion is radially outwardly of the other portion, each portion is associated individually with one of the two said pole faces of the, or each, electromagnet, and the two portions separated from each other along the axis of the shaft.

2. An axial magnetic bearing according to claim 1, characterised in that the thrust face has precisely the shape of a truncated cone.

3. An axial magnetic bearing according to claim 1, characterised in that the two said portions of the thrust face extend precisely radially, and each is opposite to, and spaced from, an individually associated precisely radially extending pole face of the, or each, electromagnet of the structure, and between the two said portions, there is a part of the thrust face having the shape of a truncated cone.

4. An axial magnetic bearing according to any one preceding claim, characterised in that the mean axial width of each of the two parts of the rotor disc providing the two said portions of the thrust face is, at least substantially, equal to the radial width of the, or each, associated pole face.

5. An axial magnetic bearing according to any one preceding claim, characterised in that the product of the mean axial width of either one of the two parts of the rotor disc providing the two said portions of the thrust face, and the mean radial spacing of said one part of the rotor disc from the axis of the shaft, is, at least substantially, the same as the corresponding product associated with the other such part of the rotor disc.

6. An axial magnetic bearing according to any one preceding claim, characterised in that the shaft is of ferromagnetic material, and said at least one thrust face is provided by a rotor disc machined from the shaft material.

7. An axial magnetic bearing according to any one preceding claim, characterised in that said at least one thrust face is provided by a rotor disc secured to the shaft.

8. An axial magnetic bearing according to any one preceding claim, characterised in that there are two structures each having at least one electromagnet, and which structures are arranged to be able to provide axial forces in opposition to each other, and the tapered rotor disc has two generally radially extending faces, each such face to accept thrusts along the shaft in the opposite direction to that in relation to which the other face is to accept thrusts.

FIG.1 PRIOR ART

EP 0 411 696 A2

FIG.2

FIG.3